# EUROPEAN PATENT APPLICATION

(11) **EP 4 738 857 A1**
(43) Date of publication of application: **06.05.2026**
(21) Application number: 24209770.7
(22) Date of filing: 30.10.2024
(51) Int. Cl.: H04N 23/54, G02B 7/02, G03B 30/00, H04M 1/02, H04N 23/55, H04N 23/57

(54) **CAMERA SYSTEM, MANUFACTURING METHOD THEREOF AND OPTICAL ELEMENT MOUNTABLE TO A CIRCUIT PLATFORM**

(71) Applicant: Aptiv Technologies AG, 8200 Schaffhausen (CH)
(72) Inventor: Rafalowski, Arkadiusz, 32-064 Brzezinka (PL); Duralek, Janusz, 33-380 Krynica Zdroj (PL); Hebda, Pawel, 30-382 Krakau (PL)
(74) Representative: Manitz Finsterwald Patent- und Rechtsanwaltspartnerschaft mbB

(57) **Abstract**

A camera system comprising a circuit platform and an optical element mounted to the circuit platform is provided, wherein the optical element comprises a bonding surface, wherein the bonding surface of the optical element is in contact with and bonded to a bonding surface of the circuit platform, wherein at least a part of the bonding surface of the optical element comprises a surface texture deviating from a smooth plane.

## Description

### FIELD

The present disclosure relates to a camera system, a method of manufacturing a camera system, and an optical element for a camera system, wherein a bonding surface of the optical element that is mountable to a circuit platform has a surface texture deviating from a smooth plane.

### BACKGROUND

Manufacturing processes of camera systems may comprise steps that require mounting of an optical element, such as a lens, to a circuit platform, such as a Printed Circuit Board (PCB). The manufactured cameras can be intended for, but are not limited to, the use in automotive applications such as driver monitoring systems.

Mounting of an optical element to a circuit platform is usually done by bonding a bonding surface of the optical element to a bonding surface of the circuit platform, typically by use of an adhesive. However, since the bonding surface of common optical elements is smooth, the bonding strength may be lacking and the optical element and the circuit platform may separate during or after manufacturing of the camera system. Furthermore, there may be an unwanted formation of bubbles and/or voids at the interface between the bonding surface of the optical element and the bonding surface of the circuit platform, particularly in the adhesive. Any of these effects can lead to a deterioration in performance or even complete failure of the manufactured camera system.

Accordingly, there is a need to improve the fail-safety of a camera system and manufacturing method thereof, particularly with respect to mounting an optical element to a circuit platform.

### SUMMARY

The present disclosure provides a camera system, a method of manufacturing a camera system, particularly a method of mounting an optical element to a circuit platform, and an optical element for a camera system according to the independent claims. Embodiments are given in the subclaims, the description and the drawings.

In one aspect, the present disclosure is directed at a camera system comprising a circuit platform and an optical element mounted to the circuit platform. The optical element comprises a bonding surface, wherein the bonding surface of the optical element is in contact with and bonded to a bonding surface of the circuit platform. Therein, at least a part of the bonding surface of the optical element comprises a surface texture deviating from a smooth plane, particularly deviating from an ideal smooth plane.

In other words, at least a part of the bonding surface of the optical element may have (irregularly or regularly spaced) deviations in the surface texture. By introducing said surface texture to the bonding surface of the optical element, the contact area (i.e. the area where the bonding surface of the optical element and the bonding surface of the circuit platform are interfacing when brought into contact with each other) can be increased on the same footprint (of the optical element and/or the circuit platform) and thereby, the bonding strength can be increased.

The camera system me be a part or element of a larger camera system or assembly. Alternatively or additionally, the camera system may comprise further components such as other optical elements and/or circuit platforms, wherein not all of these other optical elements are necessarily (directly) mounted to a circuit platform. The camera system may be able to capture or used for acquisition of color images, black-and-white images, and/or depth images (e.g. as 3D camera or ToF-camera).

The circuit platform may comprise an electronics substrate, a mechanical support, and/or wiring for assembly of electronic components. According to an embodiment, the circuit platform is a Printed Circuit Board (PCB).

The optical element may comprise or be an optical component designed to manipulate light to achieve, for example, imaging or focusing effects. The optical element may or may not comprise electronic or electric components. According to an embodiment, the optical element comprises or is a lens.

The bonding surface of the optical element is preferably in direct contact with and directly bonded to a bonding surface of the circuit platform (besides an adhesive layer or adhesive coating in between).

A bonding surface may refer to a surface that can be bonded to, joined with, adhered to, and/or be brought into contact with another bonding surface such that both surfaces are bonded together with a certain bonding strength, which can be measured, for example, in units of Pascal in pulling experiments.

The optical element may comprise a body and/or a housing. The body and/or the housing of the optical element may comprise a metal, plastic, rubber and/or ceramic material. The bonding surface of the optical element may be at least partly located on the housing and/or the body.

According to an embodiment, the optical element comprises a body, wherein the body comprises at least a part of the bonding surface of the optical element. Additionally or alternatively, the optical element comprises a housing, wherein the housing comprises at least a part of the bonding surface of the optical element. According to an embodiment, the optical element comprises a housing or a body, and the housing or the body of the optical element comprises the bonding surface of the optical element.

The optical element, and particularly the body and/or housing of the optical element, may be produced by 3D printing, milling, extrusion, and/or (injection) molding.

The surface texture may be formed on and/or introduced to the bonding surface of the optical element by etching, printing, milling, grinding, and/or molding. Preferably, the surface texture is formed and/or introduced during the manufacturing of the optical element, and particularly during the manufacturing of the body and/or housing of the optical element. In other words, there may be no need to subject the optical element to a surface treatment after its manufacture to produce and/or introduce the surface texture since the manufacturing of the optical element intrinsically or intentionally already includes the formation of the surface texture on the bonding surface. This way, a post-manufacture surface treatment may be avoided which may be harmful to other sensitive components of the optical element.

At least a part of the optical element, wherein said part comprises the bonding surface, may be a solid block. In other words, at least the part of the optical element that has the bonding surface may be a single piece, and therefore, the surface texture of the bonding surface of the optical element may be a surface texture of (and/or directly formed in) the single piece.

According to an embodiment, the bonding surface of the optical element comprises micro-irregularities.

According to an embodiment, the bonding surface of the optical element comprises a surface roughness, (regular or irregular) waviness, and/or at least one geometric form.

According to an embodiment, the bonding surface of the optical element comprises at least one geometric form comprising a bump (e.g. a micro bump), indentation, protrusion, prism, polyhedron, recess, trench, wall, ridge, bar, and/or groove. The geometric form may not be particularly limited to a specific geometric form as long as a surface texture is achieved that deviates from a smooth plane.

According to an embodiment, the geometric form is tapered, conical, truncated, and/or sloping-sided.

According to an embodiment, the bonding surface of the optical element comprises a multitude of irregularly or regularly spaced, oriented, shaped and/or sized geometric forms. This way, an increase in bonding strength may be achieved while at the same time formation of bubbles and/or voids is reduced or avoided. For example, smaller geometric forms, such as prism shapes and/or pyramidal shapes, that cover a majority of the bonding surface may be combined with at least one larger recess and/or groove that connects an interface between the bonding surface of the optical element and the bonding surface of the circuit platform to the outside and/or inside of the optical element. This way, an increase in the bonding strength may be achieved while also alleviating or avoiding the formation of bubbles and/or voids.

According to an embodiment, the bonding surface of the optical element comprises a multitude of prism shapes and/or pyramidal shapes.

According to an embodiment, the surface texture covers the complete bonding surface of the optical element.

According to an embodiment, geometric forms cover the complete bonding surface of the optical element.

According to an embodiment, the surface roughness has an Ra roughness value (e.g. determined according to EN ISO 4287:2000 or ISO 4287:1997) in the range of 1 nm to 100 µm, preferably 10 nm to 100 µm, more preferably 100 nm to 100 µm, more preferably 1 µm to 100 µm, more preferably 1 µm to 50 µm, more preferably 10 µm to 50 µm, and more preferably 25 µm to 50 µm, wherein the Ra roughness value is, for example, determined by measuring a test surface of 1 cm x 1 cm using a laser scanning microscope.

According to an embodiment, the geometric form has a height, width, length, depth, and/or thickness of equal to or smaller than 10 mm, preferably equal to or smaller than 5 mm, more preferably equal to or smaller than 3 mm, more preferably equal to or smaller than 2 mm, more preferably equal to or smaller than 1 mm, more preferably equal to or smaller than 500 µm, more preferably equal to or smaller than 250 µm, more preferably equal to or smaller than 100 µm, and more preferably equal to or smaller than 50 µm.

According to an embodiment, the geometric form has a height, width, length, depth, and/or thickness of equal to or larger than 1 µm, more preferably equal to or larger than 10 µm, and more preferably equal to or larger than 25 µm.

According to an embodiment, the geometric form has a height, width, length, depth, and/or thickness in the range of 1 µm to 10 mm, preferably 1 µm to 5 mm, more preferably 1 µm to 3 mm, more preferably 1 µm to 2 mm, more preferably 1 µm to 1 mm, more preferably 1 µm to 500 µm, more preferably 1 µm to 250 µm, more preferably 1 µm to 100 µm, more preferably 1 µm to 50 µm, more preferably 10 µm to 50 µm, and more preferably 25 µm to 50 µm.

According to an embodiment, the bonding surface of the optical element comprises a plurality of geometric forms that are arranged at a pitch in the range of 1 nm to 100 mm, more preferably 10 nm to 10 mm, more preferably 10 nm to 1 mm, more preferably 100 nm to 100 µm, more preferably 1 µm to 50 µm, more preferably 1 µm to 20 µm, and more preferably 1 µm to 10 µm. Alternatively, the geometric forms may be arranged directly adjacent to each other.

According to an embodiment, the bonding surface of the optical element comprises a regular or irregular waviness, i.e. a multitude of regularly or irregularly spaced wave-shaped deviations.

According to an embodiment, the bonding surface of the optical element comprises at least one recess and/or groove that connects an interface between the bonding surface of the optical element and the bonding surface of the circuit platform to the outside and/or inside of the optical element. This way, the formation of bubbles and/or voids at the interface between the bonding surface of the optical element and the bonding surface of the circuit platform, and particularly in an adhesive layer at the interface, may be avoided. Additionally or alternatively, the bonding surface of the optical element comprises at least one recess and/or groove that connects an inside and an outside of the optical element. This way, in addition to avoiding the formation of bubbles and/or voids, a venting function may be achieved. In other words, the recess and/or groove may function as a vent hole so as to provide venting, air exchange, and/or pressure exchange between the inside and outside of the optical element. This may be particularly useful when the camera system is heated, for example, during a later manufacturing step, which may lead to a pressure increase inside the optical element mounted to the circuit platform. Understandably, the recess and/or groove may initially not be filled with an adhesive when the optical element is bonded to the circuit platform. The recess and/or groove may be closed after the venting, air exchange, and/or pressure exchange (e.g. by use of the adhesive). However, closing of the recess and/or groove may be omitted, for example, when the entering of debris or dust to the inside of the optical element (and thus, the optical path) is not an issue for the required performance level of the camera system, when the vent holes is small enough such that the entering of debris or dust to the inside of the optical element is highly unlikely, and/or when the camera system is comprised in a housing of a larger camera system or assembly as element or part thereof (since the housing of the larger camera or assembly may prevent debris or dust from entering the inside of the optical element). Additionally or alternatively, the circuit platform may comprise a vent hole.

According to an embodiment, the bonding surface of the optical element comprises at least one recess and/or groove that connects an inside and an outside of the optical element, wherein the recess and/or groove is formed such that adhesive does not flow in and/or (completely) fill the recess and/or groove before curing of the adhesive in order to form the adhesive layer. For example, the recess and/or groove may have a width and/or depth of at least 50 µm, preferably at least 100 µm, and more preferably at least 250 µm.

According to an embodiment, the camera system further comprises an adhesive layer (of a cured adhesive and/or resin) between the bonding surface of the optical element and the bonding surface of the circuit platform.

According to an embodiment, the adhesive layer is preferably a non-conductive or conductive adhesive layer. By use of a conductive adhesive layer, conductive (metal) parts of the optical element may be grounded via the circuit platform and/or connected to wiring on the circuit platform. However, in most cases, a non-conductive adhesive layer may be used.

According to an embodiment, the adhesive layer preferably comprises (or is) a sealing layer that covers, fills, or is present on the complete interface between the bonding surface of the optical element and the bonding surface of the circuit platform. This way, debris or dust may be hindered from entering the inside of the optical element, which may set down the performance of the optical element.

Alternatively, the adhesive layer only covers, fills, or is present on a part of the interface between the bonding surface of the optical element and the bonding surface of the circuit platform (in order to provide venting, air exchange, and/or pressure exchange between the inside and the outside of the optical element). Understandably, the surface texture of the bonding surface of the optical element may aid in or cause the limiting of the (uncured) adhesive to said part of the interface during bonding. For example, during bonding, the (uncured) adhesive may only wet the part of the bonding surface of the optical element with or the part without the surface texture (depending on the surface tension of the adhesive and/or surface energy of the bonding surface of the optical element). This way, the (cured) adhesive layer can be limited to the specific part of the interface.

According to an embodiment, the adhesive layer only covers, fills, or is present on a part of the interface between the bonding surface of the optical element and the bonding surface of the circuit platform, wherein the part of the interface with the adhesive layer corresponds to the part of the interface where the surface texture of the bonding surface of the optical element is or is not present.

According to an embodiment, the bonding surface of the circuit platform comprises a surface texture deviating from a smooth plane. Accordingly, what is described herein for the surface texture of the bonding surface of the optical element may also be valid for the surface texture of the bonding surface of the circuit platform.

In another aspect, the present disclosure is directed at a method of manufacturing a camera system, particularly a method of mounting an optical element to a circuit platform, comprising providing a circuit platform comprising a bonding surface, wherein the circuit platform is preferably a Printed Circuit Board, providing an optical element comprising a bonding surface, wherein at least a part of the bonding surface of the optical element comprises a surface texture deviating from a smooth plane. The method further comprises applying an adhesive on the bonding surface of the optical element and/or the bonding surface on the circuit platform, and after applying the adhesive, bringing the bonding surface of the optical element into contact with the bonding surface of the circuit platform in order to bond the bonding surface of the optical element to the bonding surface of the circuit platform.

The adhesive may comprise an epoxy or a resin composition, e.g. a polymer (mixture), a curing agent, one or more fillers (for electrical and/or heat conductivity) and other components.

The adhesive may be a one- or two-component adhesive. In the latter case, one component of the adhesive may be applied to the bonding surface of the optical element and the other component may be applied to the bonding surface of the circuit platform. The adhesive can then be cured after the bonding surface of the optical element is brought into contact with the bonding surface of the circuit platform in order to bond the bonding surface of the optical element to the bonding surface of the circuit platform.

According to an embodiment, the method further comprises curing the adhesive after bringing the bonding surface of the optical element into contact with the bonding surface of the circuit platform to form an adhesive layer. Curing may refer to UV, temperature and/or moisture curing.

According to an embodiment, the adhesive is applied on the complete interface between the bonding surface of the optical element and the bonding surface of the circuit platform. Alternatively, the adhesive is applied only on a part of the interface between the bonding surface of the optical element and the bonding surface of the circuit platform. Understandably, the surface texture of the bonding surface of the optical element may aid in or cause the limiting of the adhesive to said part of the interface during bonding. For example, the adhesive may only wet the part of the bonding surface of the optical element with or the part without the surface texture (depending on the surface tension of the adhesive and/or surface energy of the bonding surface of the optical element). This way, the adhesive can be limited to a certain part of the interface.

According to an embodiment, the adhesive is applied only on a part of the interface between the bonding surface of the optical element and the bonding surface of the circuit platform, wherein the part of the interface where the adhesive is applied corresponds to the part of the interface where the surface texture of the bonding surface of the optical element is or is not present.

According to an embodiment, the bonding surface of the optical element comprises at least one recess and/or groove that connects an inside and an outside of the optical element, wherein the recess and/or groove is formed such that adhesive does not flow in and/or (completely) fill the recess and/or groove before curing of the adhesive in order to form the adhesive layer. For example, the recess and/or groove may have a width and/or depth of at least 50 µm, preferably at least 100 µm, and more preferably at least 250 µm.

In another aspect, the present disclosure is directed at an optical element for a camera system as described herein, wherein the optical element is mountable to a circuit platform of the camera system, wherein the optical element comprises a bonding surface, wherein the bonding surface of the optical element can be brought in contact with and bonded to a bonding surface of the circuit platform, wherein at least a part of the bonding surface of the optical element comprises a surface texture deviating from a smooth plane.

The disclosure comprised herein with respect to the inventive camera system also applies to the inventive method and optical element. This particularly applies to the embodiments disclosed with respect to the inventive camera system. It is further noted that the features disclosed herein can also be combined with each other if the contrary is not explicitly stated.

### DRAWINGS

Exemplary embodiments and functions of the present disclosure are described herein in conjunction with the following drawings, wherein
- Fig. 1A: schematically shows a camera system;
- Fig. 1B: schematically shows a camera system;
- Fig. 2: schematically shows an optical element;
- Fig. 3: schematically shows an optical element;
- Fig. 4: schematically shows an optical element.

### DETAILED DESCRIPTION

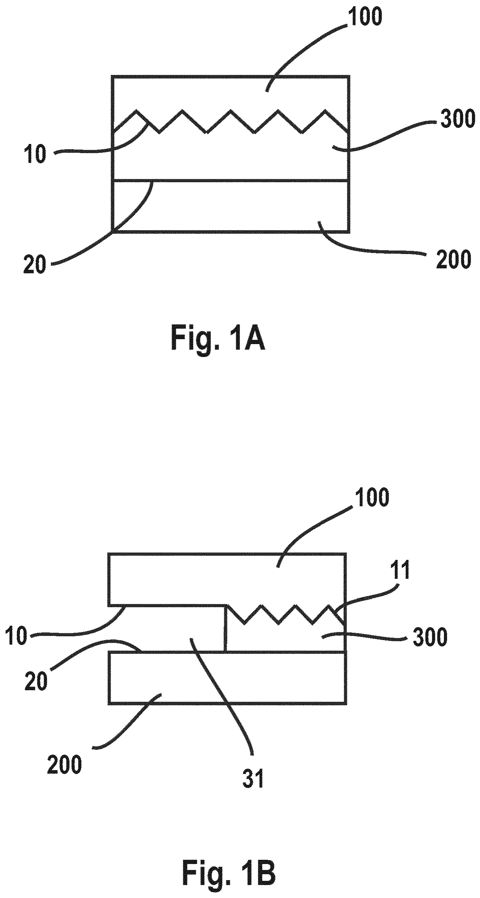

Fig. 1A and Fig. 1B each show a schematic of a camera system comprising a circuit platform 200 and an optical element 100 mounted to the circuit platform 200. The optical element 100 comprises a bonding surface 10, wherein the bonding surface 10 of the optical element 100 is in contact with and bonded to a bonding surface 20 of the circuit platform 200, wherein at least a part of the bonding surface 10 of the optical element 100 comprises a surface texture deviating from an ideal smooth plane. For example, the surface texture can comprise prism shapes and/or pyramidal shapes 11. The camera system can further comprise an adhesive layer 300 between the bonding surface 10 of the optical element 100 and the bonding surface 20 of the circuit platform 200.

As shown in Fig. 1A, the adhesive layer 300 can comprise or be a sealing layer covering, filling, or being present on the complete interface between the bonding surface 20 of the optical element 100 and the bonding surface 20 of the circuit platform 200.

Alternatively, as is shown in Fig. 1B, the adhesive layer 300 only covers, fills, or is present on a part of the interface between the bonding surface 10 of the optical element 100 and the bonding surface 20 of the circuit platform 200, wherein the part of the interface with the adhesive layer 300 corresponds to the part of the interface where the surface texture 11 of the bonding surface 10 of the optical element 10 is present. This way, a vent hole 31 may be formed.

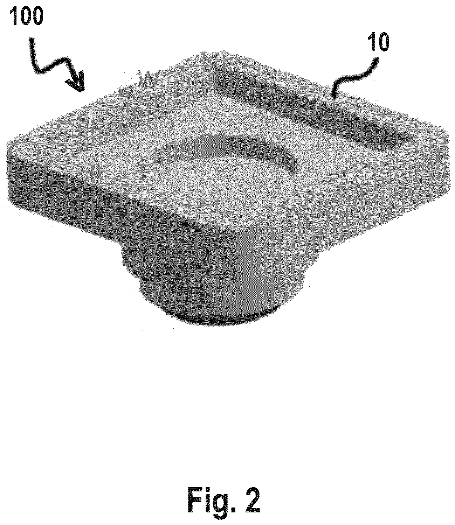

Fig. 2 schematically shows an optical element 100 for a camera system as is shown, for example, in Fig. 1A or Fig. 1B. As is illustrated in Fig. 2, at least a part of the bonding surface 10 of the optical element 100 comprises a surface texture that deviates from an ideal smooth plane. In the specific example of Fig. 2, the surface texture comprises a multitude of geometric forms, here prism shapes and/or pyramidal shapes 11, that cover the complete bonding surface 10 of the optical element 100. As shown in Fig. 2, the bonding surface 10 may have a circular shape or rectangular shape with a cut-out so as to form a ring-like surface or rim-like surface, respectively. The width W of the ring or rim (as indicated in

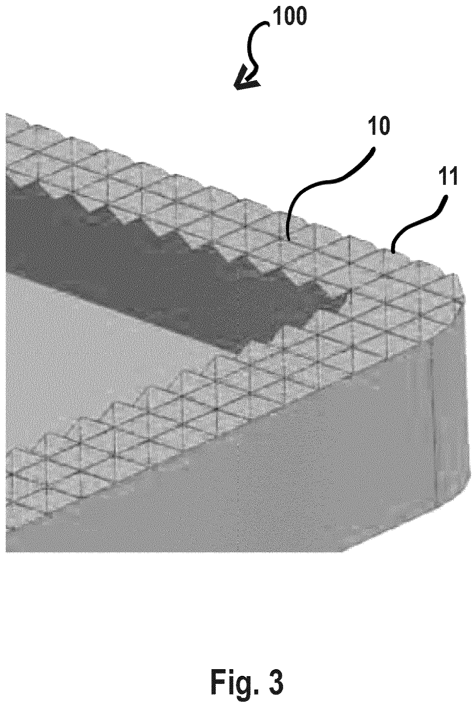

Fig. 2) may be in the range of 100 µm to 10 mm. The bonding surface 10 may comprise a rim-like surface with rounded edges (as shown in Fig. 2). The length L of the bonding surface 11 may be chosen depending on a part length. As indicated in Fig. 2, the prism shapes and/or pyramidal shapes 11 may have a height H in the range of 1 µm to 3 mm. This way, the contact area can be increased on the same footprint (of the optical element and/or the circuit platform) and thereby, the bonding strength can be increased. Fig. 3 shows a close-up of the schematic in Fig. 2, giving a better view on the surface texture, here the prism shapes and/or pyramidal shapes 11, of the bonding surface 10 of the optical element 100.

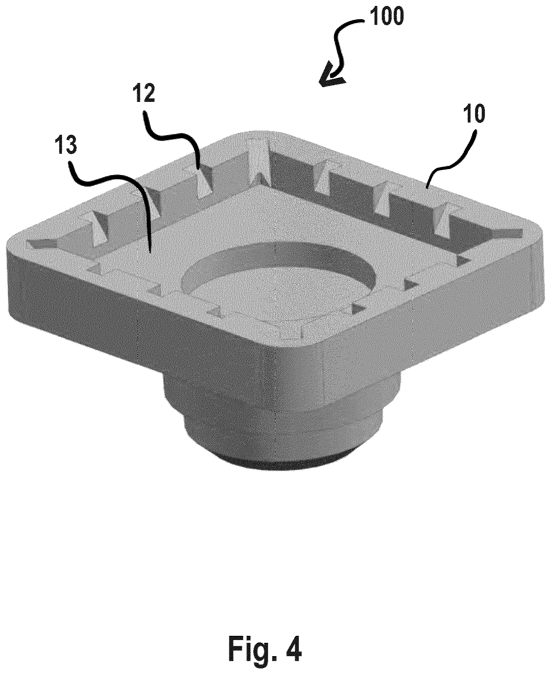

Fig. 4 shows a schematic of an optical element 100, wherein the bonding surface 10 of the optical element 100 comprises a plurality of recesses 12 that connect an interface between the bonding surface 10 of the optical element 100 and the bonding surface of the circuit platform (not shown in Fig. 4) to the inside 13 of the optical element 100. This way, the formation of bubbles or voids in the adhesive layer (not shown in Fig. 4) may be avoided. Understandably, larger geometric forms like the recesses shown in Fig. 4 may also be combined with smaller geometric forms like the prism and/or pyramidal shapes as shown, for example, in Fig. 2 and Fig. 3. This way, an increase in bonding strength may be achieved while at the same time the formation of bubbles and/or voids is reduced or avoided.

### Reference numeral list

- 10: bonding surface of the optical element
- 11: prism shapes and/or pyramidal shapes
- 12: recess
- 13: inside of the optical element
- 20: bonding surface of the circuit platform
- 31: vent hole
- 100: optical element
- 200: circuit platform
- 300: adhesive layer

## Claims

1. Camera system comprising a circuit platform (200) and an optical element (100) mounted to the circuit platform (200),
wherein the optical element (100) comprises a bonding surface (10),
wherein the bonding surface (10) of the optical element (100) is in contact with and bonded to a bonding surface (20) of the circuit platform (200), wherein at least a part of the bonding surface (10) of the optical element (100) comprises a surface texture (11, 12) deviating from a smooth plane.

2. The camera system according to claim 1,
wherein the circuit platform (200) comprises a Printed Circuit Board, PCB, and/or
wherein the optical element (100) comprises a lens.

3. The camera system according to claim 1 or 2, wherein the bonding surface (10) of the optical element (100) comprises a surface roughness, waviness, and/or at least one geometric form (11, 12).

4. The camera system according to any one of the preceding claims, wherein the bonding surface (10) of the optical element (100) comprises at least one geometric (11, 12) form comprising a bump, indentation, protrusion, prism, polyhedron, recess, trench, wall, ridge, bar, and/or groove.

5. The camera system according to any one of the preceding claims, wherein the bonding surface (10) of the optical element (100) comprises a multitude of irregularly or regularly spaced, oriented, shaped and/or sized geometric forms (11, 12).

6. The camera system according to any one of the preceding claims, wherein the bonding surface (10) of the optical element (100) comprises a multitude of prism shapes and/or pyramidal shapes (11).

7. The camera system according to any one of the preceding claims, wherein the surface texture (11, 12) covers the complete bonding surface (10) of the optical element (100).

8. The camera system according to any one of the preceding claims, wherein the bonding surface (10) of the optical element (100) comprises at least one recess and/or groove (12) that
connects an interface between the bonding surface (10) of the optical element (100) and the bonding surface (20) of the circuit platform (200) to the outside and/or inside (13) of the optical element (100), and/or
connects an inside (13) and an outside of the optical element (100).

9. The camera system according to any one of the preceding claims, wherein the geometric form (11, 12) has a height, width, length, depth, and/or thickness of equal to or larger than 1 µm, preferably equal to or larger than 10 µm, and more preferably equal to or larger than 25 µm.

10. The camera system according to any one of the preceding claims, wherein the camera system further comprises an adhesive layer (300) between the bonding surface (10) of the optical element (100) and the bonding surface (20) of the circuit platform (200).

11. The camera system according to claim 10,
wherein the adhesive layer (300) comprises a sealing layer covering, filling, or being present on the complete interface between the bonding surface (20) of the optical element (100) and the bonding surface (20) of the circuit platform (200), or
wherein the adhesive layer (300) only covers, fills, or is present on a part of the interface between the bonding surface (10) of the optical element (100) and the bonding surface (20) of the circuit platform (200), wherein the part of the interface with the adhesive layer (300) preferably corresponds to the part of the interface where the surface texture (11, 12) of the bonding surface (10) of the optical element (100) is or is not present.

12. The camera system according to any one of the preceding claims, wherein the bonding surface (20) of the circuit platform (200) comprises a surface texture deviating from a smooth plane.

13. Method of manufacturing a camera system, particularly a method of mounting an optical element (100) to a circuit platform (200), comprising providing a circuit platform (200) comprising a bonding surface (20), wherein the circuit platform (200) is preferably a Printed Circuit Board; providing an optical element (100) comprising a bonding surface (10), wherein the bonding surface (10) of the optical element (100) comprises a surface texture (11, 12) deviating from a smooth plane;
applying an adhesive on the bonding surface (10) of the optical element (100) and/or the bonding surface (20) on the circuit platform (200), wherein the adhesive is preferably applied on the complete interface between the bonding surface (10) of the optical element (100) and the bonding surface (20) of the circuit platform (200), or wherein the adhesive is preferably applied only on a part of the interface between the bonding surface (10) of the optical element (100) and the bonding surface (20) of the circuit platform (200).

14. The method of claim 13, wherein the method further comprises curing the adhesive after bringing the bonding surface (10) of the optical element (100) into contact with the bonding surface (20) of the circuit platform (200) to form an adhesive layer (300).

15. Optical element (100) for a camera system according to any of claims 1 to 12, wherein the optical element (100) is mountable to a circuit platform (200) of the camera system, wherein the optical element (100) comprises a bonding surface (10), wherein the bonding surface (10) of the optical element (100) can be brought in contact with and bonded to a bonding surface (20) of the circuit platform (200), wherein at least a part of the bonding surface (10) of the optical element (100) comprises a surface texture (11, 12) deviating from a smooth plane.

## Amended claims

### Amended claims in accordance with Rule 137(2) EPC.

1. Camera system comprising a circuit platform (200) and an optical element (100) mounted to the circuit platform (200),
wherein the optical element (100) comprises a bonding surface (10), wherein the bonding surface (10) of the optical element (100) is in contact with and bonded to a bonding surface (20) of the circuit platform (200), wherein at least a part of the bonding surface (10) of the optical element (100) comprises a surface texture (11, 12) deviating from a smooth plane, wherein the bonding surface (10) of the optical element (100) comprises a multitude of geometric forms (11, 12), wherein smaller geometric forms (11) having prism shapes and/or pyramidal shapes and covering a majority of the bonding surface (10) of the optical element (100) are combined with at least one larger recess and/or groove (12) that connects an interface between the bonding surface (10) of the optical element (100) and the bonding surface (20) of the circuit platform (200) to the outside and/or inside of the optical element (100).

2. The camera system according to claim 1,
wherein the circuit platform (200) comprises a Printed Circuit Board, PCB, and/or
wherein the optical element (100) comprises a lens.

3. The camera system according to claim 1 or 2, wherein the bonding surface (10) of the optical element (100) comprises a surface roughness, waviness, and/or at least one geometric form (11, 12).

4. The camera system according to any one of the preceding claims, wherein the bonding surface (10) of the optical element (100) comprises at least one geometric (11, 12) form comprising a bump, indentation, protrusion, prism, polyhedron, recess, trench, wall, ridge, bar, and/or groove.

5. The camera system according to any one of the preceding claims, wherein the bonding surface (10) of the optical element (100) comprises a multitude of irregularly or regularly spaced, oriented, shaped and/or sized geometric forms (11, 12).

6. The camera system according to any one of the preceding claims, wherein the bonding surface (10) of the optical element (100) comprises a multitude of prism shapes and/or pyramidal shapes (11).

7. The camera system according to any one of the preceding claims, wherein the surface texture (11, 12) covers the complete bonding surface (10) of the optical element (100).

8. The camera system according to any one of the preceding claims, wherein the bonding surface (10) of the optical element (100) comprises at least one recess and/or groove (12) that
connects an interface between the bonding surface (10) of the optical element (100) and the bonding surface (20) of the circuit platform (200) to the outside and/or inside (13) of the optical element (100), and/or
connects an inside (13) and an outside of the optical element (100).

9. The camera system according to any one of the preceding claims, wherein the geometric form (11, 12) has a height, width, length, depth, and/or thickness of equal to or larger than 1 µm, preferably equal to or larger than 10 µm, and more preferably equal to or larger than 25 µm.

10. The camera system according to any one of the preceding claims, wherein the camera system further comprises an adhesive layer (300) between the bonding surface (10) of the optical element (100) and the bonding surface (20) of the circuit platform (200).

11. The camera system according to claim 10,
wherein the adhesive layer (300) comprises a sealing layer covering, filling, or being present on the complete interface between the bonding surface (20) of the optical element (100) and the bonding surface (20) of the circuit platform (200), or
wherein the adhesive layer (300) only covers, fills, or is present on a part of the interface between the bonding surface (10) of the optical element (100) and the bonding surface (20) of the circuit platform (200), wherein the part of the interface with the adhesive layer (300) preferably corresponds to the part of the interface where the surface texture (11, 12) of the bonding surface (10) of the optical element (100) is or is not present.

12. The camera system according to any one of the preceding claims, wherein the bonding surface (20) of the circuit platform (200) comprises a surface texture deviating from a smooth plane.

13. Method of manufacturing a camera system, particularly a method of mounting an optical element (100) to a circuit platform (200), comprising providing a circuit platform (200) comprising a bonding surface (20), wherein the circuit platform (200) is preferably a Printed Circuit Board;
providing an optical element (100) comprising a bonding surface (10), wherein the bonding surface (10) of the optical element (100) comprises a surface texture (11, 12) deviating from a smooth plane;
applying an adhesive on the bonding surface (10) of the optical element (100) and/or the bonding surface (20) on the circuit platform (200), wherein the adhesive is preferably applied on the complete interface between the bonding surface (10) of the optical element (100) and the bonding surface (20) of the circuit platform (200), or wherein the adhesive is preferably applied only on a part of the interface between the bonding surface (10) of the optical element (100) and the bonding surface (20) of the circuit platform (200),
wherein the bonding surface (10) of the optical element (100) comprises a multitude of geometric forms (11, 12), wherein smaller geometric forms (11) having prism shapes and/or pyramidal shapes and covering a majority of the bonding surface (10) of the optical element (100) are combined with at least one larger recess and/or groove (12) that connects an interface between the bonding surface (10) of the optical element (100) and the bonding surface (20) of the circuit platform (200) to the outside and/or inside of the optical element (100).

14. The method of claim 13, wherein the method further comprises curing the adhesive after bringing the bonding surface (10) of the optical element (100) into contact with the bonding surface (20) of the circuit platform (200) to form an adhesive layer (300).

15. Optical element (100) for a camera system according to any of claims 1 to 12, wherein the optical element (100) is mountable to a circuit platform (200) of the camera system, wherein the optical element (100) comprises a bonding surface (10), wherein the bonding surface (10) of the optical element (100) can be brought in contact with and bonded to a bonding surface (20) of the circuit platform (200), wherein at least a part of the bonding surface (10) of the optical element (100) comprises a surface texture (11, 12) deviating from a smooth plane.
